# EUROPÄISCHE PATENTSCHRIFT

(11) **EP 2 134 189 B1**
(45) Veröffentlichungstag und Bekanntmachung des Hinweises auf die Patenterteilung: **29.03.2017**
(21) Anmeldenummer: 08708181.6
(22) Anmeldetag: 25.01.2008
(51) Int. Cl.: B30B 11/08, A23G 3/02, B30B 11/20, F16G 1/22, A23G 3/12

(54) **VORRICHTUNG ZUM FORMEN VON AUS EINEM MASSENSTRANG GEFERTIGTEN WAREN**
DEVICE FOR SHAPING GOODS THAT HAVE BEEN PRODUCED FROM A STRAND OF MATERIAL
DISPOSITIF DE FORMAGE D'ARTICLES FABRIQUÉS À PARTIR D'UN BOUDIN DE MATIÈRE

(30) Priorität: 14.03.2007 DE 102007012308
(43) Veröffentlichungstag der Anmeldung: 23.12.2009
(73) Patentinhaber: Robert Bosch GmbH, 70442 Stuttgart (DE)
(72) Erfinder: HORNSCHUCH, Stephan, 41238 Moenchengladbach (DE); FUCHS, Joachim, 40723 Hilden (DE)
(86) Internationale Anmeldenummer: PCT/EP2008/050842
(87) Internationale Veröffentlichungsnummer: WO 2008/110400

(56) Entgegenhaltungen:
- DE-A1- 3 149 834
- DE-B- 1 180 234
- DE-C- 835 985
- US-A- 4 253 815
- US-A- 5 022 841
- US-A1- 2002 123 402

## Beschreibung

### Stand der Technik

Die vorliegende Erfindung betrifft eine Vorrichtung zum Formen von aus einem Massenstrang gefertigten Waren, insbesondere bonbonartige Süßwaren.

Eine derartige Vorrichtung ist aus der DE 10 2005 018 077 A1 bekannt. Diese bekannte Vorrichtung zum Formen von Bonbons aus einem Massenstrang weist einen umlaufenden Prägekammerring mit parallel zu dessen Drehachse beidseitig offenen Prägekammern und mit zu den Prägekammern fluchtend zugeordneten Prägestempelpaaren auf, deren Stempel gegenläufig in die zugehörige Prägekammer verschiebbar sind. Seitlich des Prägekammerrings sind zwei zueinander exzentrisch umlaufende, sich aufeinander abwälzende Trennringe vorgesehen. Die Trennringe weisen messerartige Trennstege mit dazwischen angeordneten Halbformmulden auf. Die Trennstege dienen zum Abtrennen von Einzelstücken aus dem Massenstrang. Das Abtrennen erfolgt dabei bei einer Annäherung der beiden Trennringe während ihres Umlaufs, wobei der Massenstrang zwischen den beiden Trennringen zugeführt wird. Nach dem Abtrennen der Einzelstücke werden diese von den Formmulden aufgenommen und geformt. Beim weiteren Umlauf der Trennringe werden die vorgeformten Bonbons mittels der Prägestempel in die als Durchgangsbohrungen ausgebildeten Prägekammern des Prägekammerrings verschoben, wo das Prägen der Bonbons mittels der gegeneinander bewegten Prägestempel stattfindet. Anschließend werden die geprägten Bonbons mittels der Prägestempel auf eine Fördereinrichtung ausgeworfen.

Ein Nachteil der bekannten Vorrichtung liegt darin begründet, dass sich der äußere Trennring und der innere Trennring nur an einem Punkt, dem Abschneidepunkt der Bonbonmasse von dem Massenstrang, berühren. Direkt danach bewegen sich die Trennstege wieder voneinander weg. Dies führt jedoch dazu, dass das vom Massenstrang abgetrennte Massestück freigegeben wird und sich zwischen dem inneren Trennring und dem äußeren Trennring immer mehr bewegen kann, je weiter sich die beiden Trennringe voneinander entfernen. Im nächsten Schritt wird das noch ungeprägte Massestück mittels der Prägestempel nun in eine Prägekammer des Prägekammerrings verschoben. Dabei besteht die Gefahr, dass das abgetrennte Massestück an Kanten der Vorrichtung anstößt und sich öffnen kann. Insbesondere bei Süßigkeiten, welche in ihrem Inneren einen flüssigen Bestandteil aufweisen, besteht dabei die Gefahr, dass diese Flüssigkeit nach einem Stoß der abgetrennten Masse an eine Kante austritt. Ferner kann aufgrund der geringen Schließzeit einer Schnittkante der Masse auch keine Zeit gegeben werden, sich abzukühlen, so dass auch dadurch die Gefahr besteht, dass flüssige Innenbestandteile durch die noch nicht geschlossene Schnittkante austreten. Ferner kann von der äußeren Hülle des abgetrennten Massestücks während des Verschiebevorgangs auch ein erhöhter Grußabfall (Zuckerstaub) auftreten.

### Vorteile der Erfindung

Die erfindungsgemäße Vorrichtung zum Formen von aus einem Massenstrang gefertigten Waren, insbesondere bonbonartigen Süßwaren, gemäß Anspruch 1 weist demgegenüber den Vorteil auf, dass eine Beschädigung eines abgetrennten Massestücks vom Massenstrang vermieden werden kann. Ferner kann eine Verschlusszeit, in welcher sich ein abgetrenntes Massestück zwischen einem äußeren und einem inneren Trennring befindet, vergrößert werden, so dass eine Abkühlung und somit ein dauerhaftes Verschließen des abgetrennten Massestücks möglich ist. Ferner kann erfindungsgemäß das abgetrennte Massestück in der Position zwischen dem inneren und äußeren Trennring geprägt werden, so dass auf einen separaten Prägekammerring verzichtet werden kann. Dies wird erfindungsgemäß dadurch erreicht, dass der äußere Trennring flexibel ausgestaltet ist. Hierdurch kann eine längere Kontaktzeit zwischen dem äußeren Trennring und dem inneren Trennring realisiert werden und somit das Bonbon zwischen den beiden Trennringen fertiggeprägt werden. Da das Bonbon nach dem Abtrennen vom Massenstrang bis zum fertigen Prägen nicht mehr aus seiner Position gebracht werden muss, wird auch die Problematik von Beschädigungen des Bonbons und des Auftretens von Grußabfall o.Ä. vermieden. Dies wird dadurch erreicht, dass der äußere Trennring flexibel ist und nach dem Abtrennen eines Massestücks vom Massenstrang sich noch eine Weile mit dem inneren Trennring in Kontakt befindet. Dadurch kann das Prägen des abgetrennten Massestücks zum Bonbon in einer Position zwischen dem inneren und äußeren Trennring erfolgen. Nach dem Prägevorgang kann der äußere Trennring wieder vom inneren Trennring gelöst werden und die fertiggeprägte Ware kann abtransportiert werden.

Aus der DE 31 49 834 A1 ist eine Form zur Herstellung von harten und gefüllten, gestanzten Karamellen bekannt. Hierbei ist ein Rad vorgesehen, welches auf seinem äußeren Umfang eine Vielzahl von Verformungshalbsitzen aufweist. Diese arbeiten mit einem aus einer Vielzahl von als Kranzabschnitte ausgeführten Gleitstücken bestehenden äußeren Kranz zusammen, wobei die Gleitstücke am Rad beweglich in radialer Richtung gelagert sind. Die Gleitstücke sind jeweils durch ein Längsloch geführt, in dem eine Schraube durchgreift, die jeweils ein Gleitstück zwischen einem Stanzrad und einem Positionierungsring lagert. Das Öffnen der Gleitstücke erfolgt aufgrund der Fliehkraft während der Schließbewegung durch einen den Gleitstückkranz zu etwa drei Viertel des Umfangs umhüllenden Riemen.

Die Unteransprüche zeigen bevorzugte Weiterbildungen der Erfindung.

Hierbei ist der äußere Trennring ein kettenartiges Element. Hierdurch kann auf einfache und kostengünstige Weise ein flexibler äußerer Trennring bereitgestellt werden.

So umfasst das kettenartige Element eine Vielzahl von Kettengliedern, ein umlaufendes Band und eine Vielzahl von Verschlusselementen. Das umlaufende Band ist dabei zwischen den Kettengliedern und den Verschlusselementen angeordnet, wobei die Kettenglieder jeweils mittels der Verschlusselemente am umlaufenden Band befestigt sind. Die Kettenglieder können sich dabei relativ zum umlaufenden Band bewegen, um die Flexibilität des äußeren Trennrings bereitzustellen. Alternativ kann das kettenartige Element auch eine Vielzahl von Kettengliedern umfassen, welche mittels einer Bolzenverbindung miteinander gelenkig verbunden sind.

Hierbei umfasst das kettenartige Element eine Vielzahl von Stiften, welche die Verschlusselemente jeweils an den Kettengliedern fixieren. Dadurch kann eine einfache Verbindung zwischen den Verschlusselementen und den Kettengliedern realisiert werden.

Erfindungsgemäß stehen die Stifte seitlich über den äußeren Trennring vor, um mit einer Antriebseinrichtung zum Antreiben des äußeren Trennrings in Eingriff zu kommen.

Die Unteransprüche zeigen bevorzugte Weiterbildungen der Erfindung. Besonders bevorzugt ist am inneren Trennring eine Verzahnung angeordnet, welche mit den vorstehenden Stiften am äußeren Trennring in Eingriff bringbar ist, um den äußeren Trennring anzutreiben.

Gemäß einer weiteren bevorzugten Ausgestaltung der vorliegenden Erfindung ist das Band ein Stahlband. Hierdurch kann das kettenartige Element besonders kostengünstig bereitgestellt werden.

Weiter bevorzugt umfasst ein Kettenglied einen messerartigen Trennsteg, ein erstes Muldenviertel und ein zweites Muldenviertel, wobei das erste Muldenviertel an einer ersten Seite des Trennstegs und das zweite Muldenviertel an einer zweiten Seite des Trennstegs angeordnet sind. Dabei wird eine Muldenhälfte des äußeren Trennrings durch zwei einander benachbarte Muldenviertel von zwei zueinander benachbarte Kettenglieder gebildet.

Vorzugsweise weist jedes Kettenglied einen inneren Anschlag und einen äußeren Anschlag auf. Dadurch kann die Gelenkigkeit der einzelnen Kettenglieder auf ein vorbestimmtes Maß beschränkt werden.

Gemäß einer weiteren bevorzugten Ausgestaltung der Erfindung ist seitlich benachbart zu den Trennringen ein Zwischenspeicher angeordnet, um fertiggeprägte Waren bis zu einer Auswerfereinheit zwischenzuspeichern. Hierdurch kann eine einfache Konstruktion der erfindungsgemäßen Vorrichtung ermöglicht werden und insbesondere ein beschädigungsfreier Übergang der fertiggeprägten Waren sichergestellt werden.

### Zeichnung

Nachfolgend werden Ausführungsbeispiele der Erfindung unter Bezugnahme auf die begleitende Zeichnung im Detail beschrieben. In der Zeichnung ist:
- Figur 1: eine schematische, teilweise geschnittene Seitenansicht einer Vorrichtung gemäß einem Ausführungsbeispiel der Erfindung,
- Figur 2: eine schematische, perspektivische Ansicht der in Figur 1 gezeigten Vorrichtung,
- Figur 3: eine schematische, perspektivische Ansicht eines in den Figuren 1 und 2 gezeigten flexiblen äußeren Trennrings,
- Figur 4: eine Seitenansicht des Trennring von Figur 3, und
- Figur 5: eine vergrößerte, perspektivische Teilansicht einer Verbindung zwischen dem äußeren Trennring und einem inneren Trennring.

### Bevorzugte Ausführungsform der Erfindung

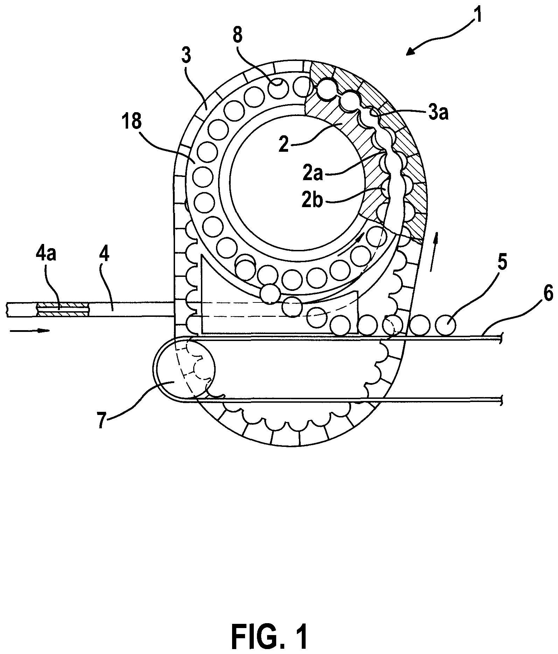

Nachfolgend wird unter Bezugnahme auf die Figuren 1 bis 5 eine Vorrichtung 1 zum Formen von aus einem Massenstrang gefertigten Waren, insbesondere Bonbons, beschrieben.

In den Figuren ist eine Vorrichtung 1 dargestellt, welche zum Abtrennen und Prägen von Bonbons 5 aus einem ausgewalzten und ausgezogenen, insbesondere mit einem flüssigen oder halbflüssigen Füllgut 4a gefüllten Massenstrang 4 dient. Es sei jedoch angemerkt, dass anstelle der Bonbons auch jede andere Art von Süßwaren oder Kaugummistücken usw. hergestellt werden können.

Wie insbesondere aus Figur 1 ersichtlich ist, umfasst die Vorrichtung 1 einen inneren Trennring 2 und einen äußeren Trennring 3. Der äußere Trennring 3 ist dabei ein flexibler Ring, welcher in diesem Ausführungsbeispiel als kettenartiges Element vorgesehen ist.

Die Vorrichtung 1 umfasst ferner ein Förderband 6, welches an einer Umlenkrolle 7 umgelenkt wird und die fertiggeformten Bonbons 5 abführt (vgl. Figur 1).

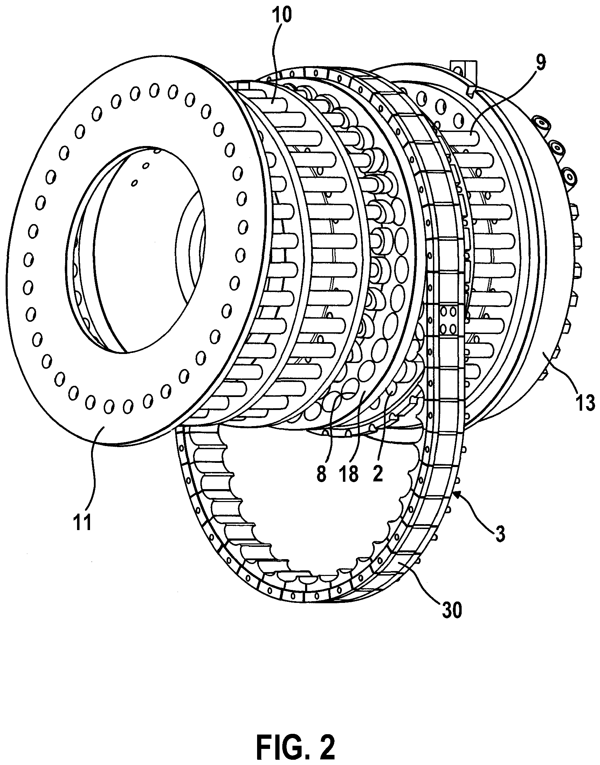

Wie aus Figur 2 ersichtlich ist, umfasst die Vorrichtung 1 eine Vielzahl erster Prägestempel 9 und eine Vielzahl zweiter Prägestempel 10. Die ersten Prägestempel 9 sind dabei an einer ersten Seite der inneren und äußeren Trennringe 2, 3 angeordnet und die zweiten Prägestempel 10 sind dabei an der gegenüberliegenden Seite in Axialrichtung der inneren und äußeren Trennringe 2, 3 angeordnet. Die ersten Prägestempel 9 befinden sich mit einer Kurvenbahn 13 in Verbindung, welche eine axiale Position der ersten Prägestempel 9 vorgibt. In ähnlicher Weise sind die zweiten Prägestempel 10 mit einer Taumelscheibe 11 verbunden, welche ebenfalls die axiale Position der zweiten Prägestempel 10 vorgibt. Ferner ist an einer Seite in Axialrichtung der inneren und äußeren Trennringe 2, 3 eine Aufnahmescheibe 18 mit einer Vielzahl von Öffnungen 8 angeordnet. Wie aus Figur 2 ersichtlich ist, sind die Öffnungen 8 als Durchgangsöffnungen ausgebildet und weisen einen im Wesentlichen zylindrischen Querschnitt auf. Der Querschnitt der Öffnungen 8 entspricht dabei im Wesentlichen einem Querschnitt einer zwischen dem inneren Trennring 2 und dem äußeren Trennring 3 gebildeten Mulde. Ein mittlerer Durchmesser der Öffnungen 8 entspricht dabei einem mittleren Durchmesser der durch den inneren und äußeren Trennring 2, 3 gebildeten Mulden.

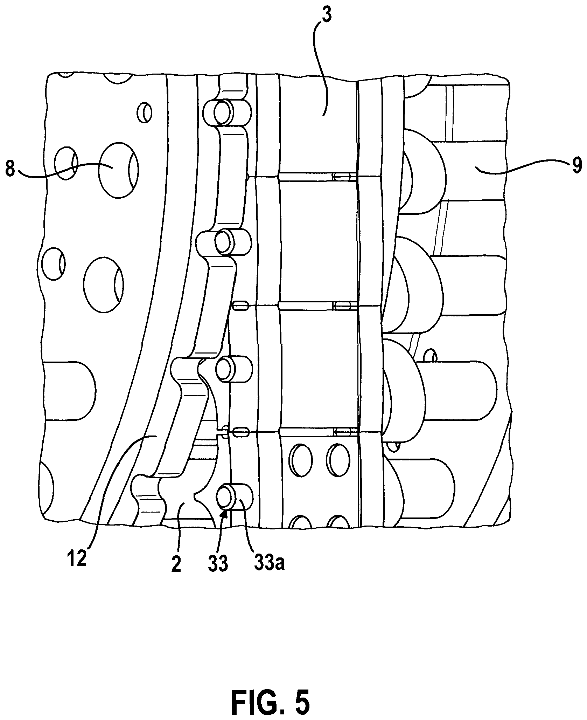

Wie insbesondere aus Figur 5 ersichtlich ist, ist am äußeren Umfang der Aufnahmescheibe 18 ferner eine Verzahnung 12 vorgesehen. Die Verzahnung 12 kommt mit Zahnelementen, welche am äußeren Trennring 3 gebildet sind, in Eingriff und stellt somit den Antrieb für den äußeren Trennring 3 bereit. Die Zahnelemente sind, wie aus Figur 5 ersichtlich ist, vorstehende Bereiche 33a an Stiften 33. Über die Verzahnung 12 wird somit eine Rotationsgeschwindigkeit des inneren Trennrings 2 mit der des äußeren Trennrings 3 synchronisiert.

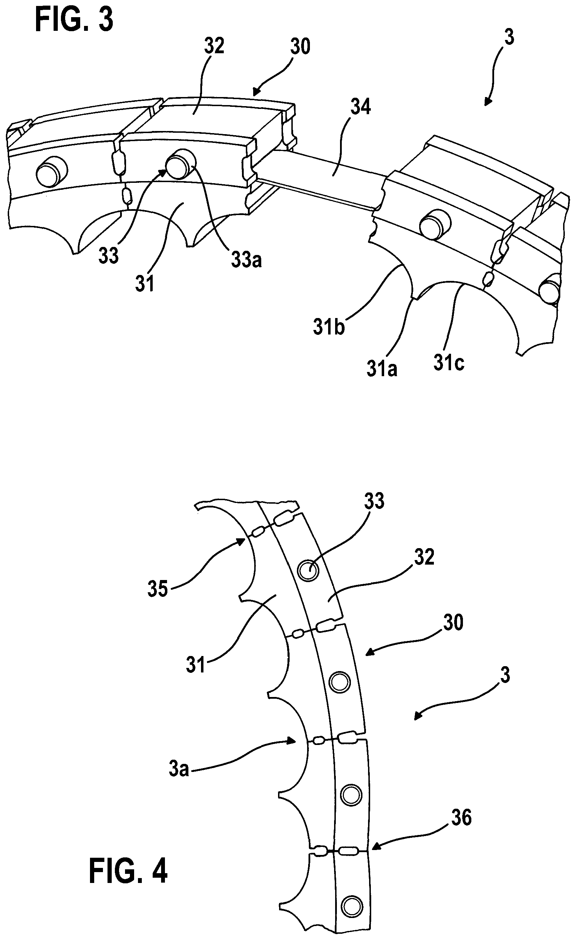

Der äußere Trennring 3 umfasst, wie insbesondere aus den Figuren 3 und 4 ersichtlich ist, eine Vielzahl von Kettengliedern 30. Jedes Kettenglied 30 umfasst dabei ein Kettenelement 31, ein Verschlusselement 32 und einen Stift 33. Ferner umfasst der äußere Trennring 3 ein umlaufendes Stahlband 34, an welchem die einzelnen Kettenglieder 30 befestigt sind. Wie aus Figur 3 ersichtlich ist, erfolgt eine Befestigung eines Kettenglieds 30 am Stahlband 34 dabei derart, dass das Stahlband 34 zwischen dem Kettenelement 31 und dem Verschlusselement 32 angeordnet ist. Dabei wird das Verschlusselement 32 mittels des Stiftes 33 am Kettenelement 31 befestigt. Wie aus Figur 4 ersichtlich ist, sind die Kettenelemente 31 ferner derart aufgebaut, dass sie einen radial innenliegenden ersten Anschlag 35 und einen radial außenliegenden zweiten Anschlag 36 bereitstellen. Dadurch wird die Flexibilität des äußeren Trennrings 3 begrenzt. Wie aus den Figuren 3 und 5 ersichtlich ist, ist der Stift 33 derart am Kettenglied 30 befestigt, dass er einen vorstehenden Bereich 33a aufweist, welcher in Axialrichtung des äußeren Trennrings 3 vorsteht. Dieser vorstehende Bereich 33a kommt mit einer Verzahnung 12 in Eingriff, welche am äußeren Umfang der Aufnahmescheibe 18 gebildet ist. Dadurch wird ein Antrieb für den äußeren Trennring 3 bereitgestellt (vgl. Figur 5). Somit weist der äußere Trennring 3 einen einfachen Aufbau auf, so dass ein verschleißarmes, wartungsfreies und kostengünstiges kettenförmiges Element bereitgestellt wird. Insbesondere kann dadurch auf eine aufwendige Bolzenverbindung für miteinander gelenkig verbundene einzelne Kettenglieder verzichtet werden. Die Gelenkigkeit des äußeren Trennrings 3 wird dabei durch die durch die inneren und äußeren Anschläge 35, 36 begrenzte Bewegbarkeit der einzelnen Kettenglieder 30 relativ zu benachbarten Kettengliedern sowie der Flexibilität des Stahlbandes 34 gewährleistet.

Wie ferner aus Figur 3 ersichtlich ist, ist am inneren Umfang des äußeren Trennrings 3 am Kettenelement 31 ein messerartiger Trennsteg 31 a sowie ein erstes Muldenviertel 31b und ein zweites Muldenviertel 31c gebildet. Die beiden Muldenviertel 31b und 31c bilden dabei mit jeweils benachbarten Muldenvierteln eine erste Muldenhälfte 3a am äußeren Trennring 3. Eine zweite Muldenhälfte 2b ist am inneren Trennring 2 gebildet (vgl. Figur 1), wobei die Muldenhälften 2b ebenfalls jeweils durch messerartige Trennstege 2a voneinander getrennt sind.

Um nun aus dem zugeführten Massenstrang 4 einzelne Massestücke abzutrennen, werden, wie aus Figur 1 ersichtlich ist, die beiden Trennringe 2, 3 kontinuierlich aufeinander zubewegt, bis der Trennsteg 2a des inneren Trennrings 2 den Trennsteg 31a des äußeren Trennrings 3 berührt. In diesem Moment wird ein Massestück vom Massenstrang 4 abgetrennt und in der zwischen dem inneren und äußeren Trennring gebildeten Mulde geformt. Um das Bonbon fertig zu formen, werden dann nach dem Abtrennen des Masseteils ein erster Prägestempel 9 und ein zweiter Prägestempel 10 in Axialrichtung aufeinander zubewegt, um das Bonbon in der temporär zwischen dem inneren Trennring 2 und dem äußeren Trennring 3 gebildeten Mulde fertig zu prägen. Nachdem das Bonbon 5 fertiggeprägt wurde, wird aufgrund der Vorgabe der Taumelscheibe 11 der zweite Prägestempel 10 wieder in Axialrichtung zurückbewegt und der erste Prägestempel 9 wird entsprechend der Kurvenbahn 13 weiter in Richtung des zweiten Prägestempels 10 bewegt, um das fertige Bonbon aus der temporären Mulde zwischen den beiden Trennringen 2, 3 in die Öffnung 8 in der Aufnahmescheibe 18 zu überführen. Dies ist problemlos möglich, da die Rotationsgeschwindigkeit der Aufnahmescheibe 18 der des inneren Trennrings 2 und der des äußeren Trennrings 3 entspricht. Anschließend wird, wie in Figur 2 angedeutet, das fertige Bonbon 5 aus der Öffnung 8 auf das Förderband 6 übergeben. Dies kann durch eine weitere entsprechende axiale Bewegung der Prägestempel erfolgen. Nach der Übergabe des fertigen Bonbons von der temporären Mulde zwischen dem inneren und äußeren Trennring entfernt sich der äußere Trennring 3 wieder vom inneren Trennring 2, wie aus Figur 1 ersichtlich ist.

Somit kann erfindungsgemäß sichergestellt werden, dass das Bonbon 5 noch während seines Aufenthalts in der Mulde zwischen den beiden Trennringen 2, 3 fertiggeprägt wird. Dadurch wird verhindert, dass einerseits Beschädigungen am Bonbon auftreten können und andererseits ein eventuell im Massenstrang 4 vorhandener flüssiger Innenbereich 4a aus dem noch nicht fertiggeprägten Bonbon auslaufen kann. Ferner hat die erfindungsgemäße Vorrichtung 1 den Vorteil, dass ein nur vom Massenstrang 4 abgetrenntes Massestück kurze Zeit ruhig in der temporären Mulde zwischen den beiden Trennringen 2, 3 verbleibt, so dass ein dauerhaftes Verschließen und Abkühlen des abgetrennten Teils möglich ist und somit ein Austreten eines flüssigen Innenbereichs 4a verhindert werden kann.

Wie aus Figur 1 ersichtlich ist, liegt erfindungsgemäß somit der äußere Trennring 3 über einen längeren Zeitraum unmittelbar am inneren Trennring 2 an, wobei sich insbesondere die Trennstege 2a, 31a der beiden Trennringe berühren. Wie in Figur 2 angedeutet, entspricht dieser Bereich, in welchem sich die beiden Trennringe 2, 3 berühren, ungefähr dem viertel Umfang des inneren Trennrings 2.

Die vorliegende Erfindung eignet sich insbesondere zur Herstellung von bonbonartigen Süßwaren, wie z.B. gefüllten Hart- oder Weichkaramellen. Durch die kontinuierliche Bewegung des inneren Trennrings 2 und des äußeren Trennrings 3 kann dabei eine hohe Produktivität von aus einem zugeführten Massenstrang 4 hergestellten Bonbons 5 sichergestellt werden. Ein Antrieb des äußeren Trennrings 3 erfolgt über die Verzahnung 12 und ist somit am inneren Trennring 2 integriert. Dadurch kann ein Aufbau der erfindungsgemäßen Vorrichtung weiter vereinfacht werden.

## Patentansprüche

1. Vorrichtung zum Formen von aus einem Massenstrang (4) gefertigten Waren (5), insbesondere bonbonartigen Süßwaren, umfassend einen inneren Trennring (2) mit einer Vielzahl von Muldenhälften (2b) und einer Vielzahl von Trennstegen (2a), einen äußeren Trennring (3), mit einer Vielzahl von Muldenhälften (3a) und einer Vielzahl von Trennstegen (31a), wobei sich die Trennstege (2a, 31a) beim Umlauf der Trennringe (2, 3) annähern und sich schließlich berühren, um Massestücke vom Massenstrang (4) abzutrennen, Prägestempelpaare mit jeweils einem ersten Prägestempel (9) und einem zweiten Prägestempel (10), wobei der erste Prägestempel (9) an einer ersten Seite der Trennringe (2, 3) angeordnet ist und der zweite Prägestempel (10) an einer zweiten Seite gegenüber der ersten Seite der Trennringe (2, 3) angeordnet ist, und eine Kurvensteuereinrichtung (11, 13), um eine Position der Prägestempel (9, 10) in Axialrichtung relativ zu den Trennringen (2, 3) zu bestimmen, wobei der äußere Trennring (3) flexibel ist und den inneren Trennring (2) während einer Prägephase der Ware (5) berührt, um die Ware zwischen dem inneren Trennring (2) und dem äußeren Trennring (3) mittels der Prägestempel (9, 10) zu prägen, wobei der äußere Trennring (3) ein kettenartiges Element ist, wobei das kettenartige Element eine Vielzahl von Kettengliedern (30) und ein umlaufendes Band (34) umfasst, wobei jedes Kettenglied (30) ein Kettenelement (31) und ein mit dem Kettenelement (31) verbundenes Verschlusselement (32) umfasst, wobei das Band (34) zwischen dem Kettenelement (31) und dem Verschlusselement (32) angeordnet ist, wobei jedes Kettenglied (3) ferner einen Stift (33) umfasst, welcher die Verschlusselemente (33) an den Kettenelementen (31) befestigt, **dadurch gekennzeichnet, dass** die Stifte (33) einen vorstehenden Bereich (33a) aufweisen, welcher seitlich in Axialrichtung über den äußeren Trennring (3) vorsteht, um mit einer Antriebseinrichtung für einen Antrieb des äußeren Trennrings (3) in Eingriff zu kommen.

2. Vorrichtung nach Anspruch 1, **dadurch gekennzeichnet, dass** die Antriebseinrichtung eine Verzahnung (12) am inneren Trennring (2) umfasst, welche mit den Stiften (33) des äußeren Trennrings (3) in Eingriff bringbar ist, um den äußeren Trennring (3) anzutreiben.

3. Vorrichtung nach einem der Ansprüche 1 bis 2, **dadurch gekennzeichnet, dass** das Band (34) ein Stahlband ist.

4. Vorrichtung nach einem der Ansprüche 1 bis 3, **dadurch gekennzeichnet, dass** jedes Kettenelement (31) einen Trennsteg (31 a), ein erstes Muldenviertel (31 b) und ein zweites Muldenviertel (31 c) umfasst, wobei der Trennsteg (31 a) zwischen dem ersten Muldenviertel (31b) und dem zweiten Muldenviertel (31c) angeordnet ist und wobei jedes Muldenviertel mit einem benachbarten Muldenviertel eines benachbarten Kettenelements eine Muldenhälfte (3a) am äußeren Trennring (3) bildet.

5. Vorrichtung nach einem der Ansprüche 1 bis 4, **dadurch gekennzeichnet, dass** jedes Kettenglied (30) einen inneren Anschlag (35) und einen äußeren Anschlag (36) aufweist.

## Claims

1. Device for shaping goods (5) that have been produced from a mass strand (4), in particular confectionery-type sweets, comprising an internal annular separator (2)
having a multiplicity of cavity halves (2b) and a multiplicity of separation webs (2a),
an external annular separator (3) having a multiplicity of cavity halves (3a) and a multiplicity of separation webs (31a), wherein the separation webs (2a, 31a) converge when the annular separators (2, 3) revolve and finally contact one another so as to sever mass pieces from the mass strand (4),
embossing-die pairs each having one first embossing die (9) and one second embossing die (10), wherein the first embossing die (9) is disposed on a first side of the annular separators (2, 3) and the second embossing die (10) is disposed on a second side that is opposite the first side of the annular separators (2, 3),
and a cam-control installation (11, 13) for determining a position of the embossing dies (9, 10) in the axial direction relative to the annular separators (2, 3),
wherein the external annular separator (3) is flexible and contacts the internal annular separator (2) during an embossing phase of the goods (5), so as to emboss the goods between the internal annular separator (2) and the external annular separator (3) by means of the embossing dies (9, 10),
wherein the external annular separator (3) is a chain-type element, wherein the chain-type element comprises a multiplicity of chain links (30) and a revolving belt (34), wherein each chain link (30) comprises a chain element (31) and a closure element (32) that is connected to the chain element (31), wherein the belt (34) is disposed between the chain element (31) and the closure element (32),
wherein each chain link (3) furthermore comprises a pin (33) which fastens the closure elements (33) to the chain elements (31), **characterized in that** the pins (33) have a projecting region (33a) which in the axial direction projects laterally beyond the external annular separator (3) so as to engage with a drive installation for driving the external annular separator (3).

2. Device according to Claim 1, **characterized in that** the drive installation has a toothing (12) on the internal annular separator (2), which toothing (12) is engageable with the pins (33) of the external annular separator (3), so as to drive the external annular separator (3).

3. Device according to one of Claims 1 to 2, **characterized in that** the belt (34) is a steel belt.

4. Device according to one of Claims 1 to 3, **characterized in that** each chain element (31) comprises a separation web (31a), a first cavity quarter (31b), and a second cavity quarter (31c), wherein the separation web (31a) is disposed between the first cavity quarter (31b) and the second cavity quarter (31c), and wherein each cavity quarter conjointly with an adjacent cavity quarter of an adjacent chain element forms a cavity half (3a) on the external annular separator (3).

5. Device according to one of Claims 1 to 4, **characterized in that** each chain link (30) has an internal detent (35) and an external detent (36).

## Revendications

1. Dispositif de formage d'articles (5) fabriqués à partir d'un boudin de matière (4), en particulier de confiseries de type bonbons, comprenant un anneau de séparation interne (2) avec une pluralité de moitiés de cavités (2b) et une pluralité de nervures de séparation (2a), un anneau de séparation extérieur (3), comprenant une pluralité de moitiés de cavités (3a) et une pluralité de nervures de séparation (31a), les nervures de séparation (2a, 31a) se rapprochant et venant finalement en contact lors de la mise en circulation des anneaux de séparation (2, 3) afin de séparer les morceaux de matière du boudin de matière (4), des paires de matrices de gaufrage avec à chaque fois une première matrice de gaufrage (9) et une deuxième matrice de gaufrage (10), la première matrice de gaufrage (9) étant disposée au niveau d'un premier côté des anneaux de séparation (2, 3) et la deuxième matrice de gaufrage (10) étant disposée au niveau d'un deuxième côté en regard du premier côté des anneaux de séparation (2, 3), et un dispositif de commande de came (11, 13) afin de déterminer une position des matrices de gaufrage (9, 10) dans la direction axiale par rapport aux anneaux de séparation (2, 3), l'anneau de séparation extérieur (3) étant flexible et venant en contact avec l'anneau de séparation intérieur (2) pendant une phase de gaufrage des articles (5), afin de gaufrer les articles entre l'anneau de séparation intérieur (2) et l'anneau de séparation extérieur (3) au moyen des matrices de gaufrage (9, 10), l'anneau de séparation extérieur (3) étant un élément de type chaîne, l'élément de type chaîne comprenant une pluralité de maillons de chaîne (30) et une bande périphérique (34), chaque maillon de chaîne (30) comprenant un élément de chaîne (31) et un élément de fermeture (32) connecté à l'élément de chaîne (31), la bande (34) étant disposée entre l'élément de chaîne (31) et l'élément de fermeture (32), chaque maillon de chaîne (3) comprenant en outre une goupille (33) qui fixe les éléments de fermeture (33) au niveau des éléments de chaîne (31), **caractérisé en ce que** les goupilles (33) présentent une région saillante (33a) qui fait saillie latéralement dans la direction axiale au-delà de l'anneau de séparation extérieur (3), afin de venir en prise avec un dispositif d'entraînement pour un entraînement de l'anneau de séparation extérieur (3).

2. Dispositif selon la revendication 1, **caractérisé en ce que** le dispositif d'entraînement comprend une denture (12) au niveau de l'anneau de séparation intérieur (2), laquelle peut être amenée en prise avec les goupilles (33) de l'anneau de séparation extérieur (3) afin d'entraîner l'anneau de séparation extérieur (3).

3. Dispositif selon l'une quelconque des revendications 1 à 2, **caractérisé en ce que** la bande (34) est une bande d'acier.

4. Dispositif selon l'une quelconque des revendications 1 à 3, **caractérisé en ce que** chaque élément de chaîne (31) comprend une nervure de séparation (31a), un premier quart de cavité (31b) et un deuxième quart de cavité (31c), la nervure de séparation (31a) étant disposée entre le premier quart de cavité (31b) et le deuxième quart de cavité (31c) et chaque quart de cavité formant avec un quart de cavité adjacent d'un élément de chaîne adjacent, une moitié de cavité (3a) au niveau de l'anneau de séparation extérieur (3).

5. Dispositif selon l'une quelconque des revendications 1 à 4, **caractérisé en ce que** chaque maillon de chaîne (30) présente une butée intérieure (35) et une butée extérieure (36).
